# EUROPEAN PATENT SPECIFICATION

(11) **EP 4 571 141 B1**
(45) Date of publication and mention of the grant of the patent: **23.09.2026**
(21) Application number: 23215610.9
(22) Date of filing: 11.12.2023
(51) Int. Cl.: F16F 9/19, E05F 3/04

(54) **A DASHPOT FOR DAMPING A CLOSING MOVEMENT OF A HINGED CLOSURE MEMBER**
DÄMPFER ZUR DÄMPFUNG EINER SCHLIESSBEWEGUNG EINES SCHARNIERVERSCHLUSSELEMENTS
AMORTISSEUR POUR AMORTIR UN MOUVEMENT DE FERMETURE D'UN ÉLÉMENT DE FERMETURE ARTICULÉ

(43) Date of publication of application: 18.06.2025
(73) Proprietor: Locinox, 8790 Waregem (BE)
(72) Inventor: SIX, Ivo, 8550 Zwevegem (BE)
(74) Representative: Gevers Patents

(56) References cited:
- EP-A1- 3 907 417

## Description

### Technical field

The present invention generally relates to a dashpot for damping a closing movement of a closure system having a support and a closure member that are hingedly connected to each other. The present invention further relates to a hydraulically damped actuator comprising such a dashpot.

### Background art

A known dashpot comprises: a cylinder barrel extending in a longitudinal direction and having an inner surface, the cylinder barrel being extruded from metal; a closed cylinder cavity formed within the cylinder barrel and being filled with a volume of hydraulic fluid; a piston within said cylinder barrel so as to divide the closed cylinder cavity into a high pressure compartment and a low pressure compartment, the piston having an inner surface and an outer surface and being slidable with respect to the cylinder barrel between two extreme positions in said longitudinal direction, the piston being made of a fibre reinforced polymeric material; a damper shaft rotatably mounted within the cylinder barrel and having an outer surface; and a motion converting mechanism for converting a rotational motion of the damper shaft in a sliding motion of the piston. The motion converting mechanism comprises: a rotation prevention mechanism for preventing a rotation of the piston with respect to the cylinder barrel; and mating screw threads configured to cooperate with one another so that upon a relative rotation between the cylinder barrel and the damper shaft the piston slides along the damper shaft along said longitudinal direction, the mating screw threads comprising a first screw thread provided on the outer surface of the damper shaft and a second screw thread provided on the inner surface of the piston.

Such a dashpot is disclosed in EP 3 907 417 A1 and relies on a rotation prevention mechanism comprising a separate guiding element that is bolted to an inner collar provided on the cylinder barrel. Such a separate guiding element bolted to an inner collar is also disclosed in the dashpot of WO 2018/121890 A1. The separate guiding element has longitudinally extending grooves on its inner surface which cooperate with ribs on the outer surface of the piston to prevent rotation of the piston.

A downside of the separate guiding element is the space required for this element. This applies both in the radial direction where the substantially annular guiding element causes an increased diameter of the dashpot and in the longitudinal direction where the inner collar with bolts increases the height of the dashpot.

EP 2 295 693 A1 discloses another dashpot for damping a closing movement of a hinged closure member. The dashpot also relies on a rotating damper shaft and a slidable piston with a rotation prevention mechanism to prevent piston rotation. According to EP 2 295 693 A1, the dashpot barrel is formed by cast moulding aluminium into a cup-shape. Longitudinally extending grooves are provided in the cast moulded dashpot barrel on its inner side. The piston is injection moulded from polyoxymethylene (POM) and is provided with ribs guided in the grooves present in the cast moulded dashpot to prevent a rotation of the piston.

The dashpot disclosed in EP 2 295 693 A1 has several known disadvantages, incl. hydraulic fluid leakage through the cast moulded dashpot barrel and lack of thermal stability of the piston. For these reasons, the applicant has stopped commercialization of these dashpots and has resorted to the use of extrusion moulding the aluminium cylinder barrel as disclosed in EP 3 907 417 A1. Broaching the aluminium cylinder barrel is also known in order to avoid the downsides of the cast moulded dashpot barrel.

Another problem that is known in the prior art (e.g. as disclosed in EP 3 907 417 A1) is abrasiveness of glass fibre reinforced polymeric materials with respect to aluminium alloys. In particular, the sliding motion of the glass fibre reinforced polymeric piston causes wear on the aluminium cylinder barrel. To avoid this problem, a known solution is to position a non-abrasive (or less abrasive) material between the piston and the cylinder barrel. According to the known solution, this material is provided on an outer surface of the piston (e.g. by multi-material injection moulding).

### Disclosure of the invention

It is an object of the present invention to improve the dashpot disclosed in EP 3 907 417 A1.

This object is achieved according to the invention in that the rotation prevention mechanism comprises: at least one longitudinally extending rib integrally formed with the cylinder barrel on the inner surface thereof and causing that a cross-section through the cylinder barrel in a normal plane perpendicular to the longitudinal direction has a non-circular inner contour; at least one longitudinally extending groove integrally formed with the piston on the outer surface thereof and causing that a cross-section through the piston in said normal plane has a non-circular outer contour, wherein each of the at least one longitudinally extending ribs is received in a corresponding one of the at least one longitudinally extending grooves; and at least one spacer interposed between the cylinder barrel and the piston so as to avoid direct contact of the piston and the cylinder barrel.

The provision of integrally formed rib(s) on the cylinder barrel and groove(s) in the outer piston surface avoids the need for an additional separate guiding element. There is thus no need to provide space for this additional element. This allows to either reduce the overall outer dimensions of the dashpot or, preferably, to increase the piston and/or damper shaft size. More specifically, the mating screw threads can be enlarged, thus increasing their lead while maintaining the same helix angle. By increasing the lead of the screw thread, the piston slides over a greater distance during operation of the dashpot, which greater distance causes a higher volume of hydraulic fluid to be displaced thereby improving the operation, in particular the reliability, of the dashpot.

The provision of the spacers avoids the problems associated with abrasiveness of a fibre reinforced polymeric material piston and a metal cylinder barrel as contact between the piston and the cylinder barrel is avoided.

An embodiment of the present invention is characterised in that the at least one spacer is made from a material which has a higher abrasion resistance than the metal of cylinder barrel.

This ensures that the known problems associated with abrasiveness of a fibre reinforced polymeric material piston sliding along the metal cylinder barrel are not merely transferred to wear-and-tear on the spacers. Rather, the spacers are made from a higher abrasion resistant material.

An embodiment of the present invention is characterised in that said plurality of spacers are made of a metal, such as stainless steel, or a polymeric material, such as polyamide (PA), polybutylene succinate (PBS), or polybutylene terephthalate (PBT).

Such materials are known to have a high abrasion resistance thus reducing wear-and-tear caused by the sliding piston. Having multiple options further allows to select one or the other depending on other parameters, e.g. cost, availability, environmental reasons, etc.

An embodiment of the present invention is characterised in that the at least one spacer forms at least one friction reduction element which is preferably made from a material having a lower kinetic coefficient of friction than the metal of the cylinder barrel.

In this embodiment, the spacer has an additional functionality, namely reducing friction thus allowing a smoother piston sliding motion. Whilst friction may be reduced in a variety of manners, the most convenient way is an appropriate material selection.

An embodiment of the present invention is characterised in that the piston comprises glass fibre reinforced polymeric material, in particular glass fibre reinforced polyoxymethylene (POM) or glass fibre reinforced polyamide (PA). Glass fibre may also be substituted by carbon fibre.

These two polymeric materials are especially suited to make mechanical parts having good mechanical properties, also at more elevated temperatures. They have a good flexural and tensile strength and a good stiffness and hardness. Compared to polyamide, polyoxymethylene has the advantage that it absorbs less water. When the hydraulic fluid contains some moisture, which is especially the case when the hydraulic fluid comprises a silicone oil, the use of polyoxymethylene as polymeric material for the piston is preferred.

Additionally, the presence of the glass or carbon fibres increases the strength, in particular the tensile strength, of the polymeric material and also the wear resistance.

An embodiment of the present invention is characterised in that the at least one longitudinally extending rib comprises a plurality of ribs, the at least one longitudinally extending groove comprises a plurality of grooves, and the at least one spacer comprises a plurality of spacers with each spacer being disposed between a corresponding rib-and-groove pair.

The use of multiple ribs and grooves distributes the forces involved in preventing rotation across multiple elements thus lowering pressure. This allows to provide multiple weaker rib-groove pairs as opposed to a single strong rib-groove pair.

An embodiment of the present invention is characterised in that the plurality of ribs-and-groove pairs are spread, preferably substantially uniformly, across the circumference of the cylinder barrel.

Using spread rib-and-groove pairs is advantageous as the spacers may then be formed from separate elements as opposed to a single rib-and-groove pair (or closely joined ones) which require the presence of a spacer also on the opposing side of the piston.

An embodiment of the present invention is characterised in that said plurality of spacers are part of an annular member which comprises connection regions which connect adjacent ones of said plurality of spacers, the connection regions preferably being flexible and elastic allowing a displacement of the spacers with respect to connection regions

This avoids having to position each spacer separately within the cylinder barrel which is time consuming and may lead to the elements becoming misplaced or loose. The flexible and elastic connection regions allow to more easily position the spacers inside the cylinder barrel. For example, the connection regions (which extend over an angular arc) may allow the spacers to be pushed inwards to fit inside the ribs on the cylinder barrel. For example, the spacers could extend in the height direction away from the connection regions (which in this case for a connection ring) thus allowing an inward tilting of the spacers so that these fit inside the ribs on the cylinder barrel.

An embodiment of the present invention is characterised in that said plurality of longitudinally extending grooves are formed by the provision of longitudinally extending protrusions on the outer surface of the piston with each groove being formed by two protrusions. Preferably, there is an additional free space present in the outer surface of the piston between adjacent longitudinally extending protrusions.

The provision of an additional free space reduces material required to form the grooves when compared to solid fill protrusions where a single protrusion delimits a side of two adjacent grooves. Moreover, the free space allows for an easy passage of hydraulic fluid along the piston. The free space also increases the total volume of hydraulic fluid that may be used which improves the dashpot operation.

An embodiment of the present invention is characterised in that each spacer has an inner surface and an outer surface, the inner surface contacting a respective groove in the piston and the outer surface contacting a respective rib on the cylinder barrel.

The spacers are thus wedged between the piston grooves and cylinder barrel ribs. The spacers thus cannot become dislodged or otherwise move, i.e. the spacers are static, and are held in place by the piston against the cylinder barrel. Furthermore, the spacers are thus mainly subjected to compressional forces (caused by the piston rotation) which are immediately transferred to the metal cylinder ribs.

An embodiment of the present invention is characterised in that each of said plurality of longitudinally extending ribs forms two abutment surfaces and each of said plurality of longitudinally extending grooves forms two abutment surfaces, wherein the abutment surfaces of the ribs and the grooves which face one another are parallel.

When using the dashpot, the rotation prevention mechanism is subjected to tangential forces caused by transferring the rotation from the damper shaft to the piston. Having the facing surfaces of the ribs and the grooves parallel reduces the forces to be borne by the spacers when compared to non-parallel faces which would have to be compensated by the interposed spacers.

An embodiment of the present invention is characterised in that each of said plurality of longitudinally extending ribs forms two abutment surfaces, wherein each abutment surface extends substantially tangentially with respect to the outer surface of the damper shaft.

This causes any rotational force exerted by the damper shaft to eventually be transferred to the ribs in a direction tangential to the rotational movement of the damper shaft thus optimizing the force transfer.

An embodiment of the present invention is characterised in that each of the at least one longitudinally extending ribs has an inner surface facing the piston with a mounting groove being provided in each inner surface, wherein each of the at least one spacers are provided with a ledge which fits into a corresponding mounting groove to mount a spacer to a corresponding rib.

Using grooves and ledges to mount a spacer to a corresponding rib avoids the need of additional fixation means (e.g. bolts). More importantly, there is also no need to provide elements (e.g. an inner collar) in which the fixation means can grip thus further reducing the space needed for the rotation prevention mechanism. Providing the mounting groove in the longitudinally extending ribs is also advantageous as the ribs form a local thickening of the cylinder barrel (when compared to the region of the cylinder barrel between the ribs) which thus naturally provide space for the mounting grooves.

An embodiment of the present invention is characterised in that each of the at least one spacers covers at least the entire circumference of a corresponding longitudinally extending rib.

The advantage hereof is that each spacer also covers the opposing sides of each rib so that there is an alignment between the spacer on the corresponding rib.

An embodiment of the present invention is characterised in that each of the at least one spacers is generally a non-bearing element.

The rib(s) on the cylinder barrel thus provide the required rigidity and strength to prevent the piston rotation. The spacer(s) are a non-bearing element in the sense that forces are transmitted over the spacer(s), but the spacer(s) do not have to bear this force. The spacer(s) are merely provided to avoid direct contact.

An embodiment of the present invention is characterised in that the inner faces of each of said plurality of longitudinally extending ribs are located a same hypothetical cylindrical surface with an axis extending in the longitudinal direction, the mounting grooves preferably forming part of a same hypothetical circular groove.

Having same inner diameter ribs (i.e. with the inner faces of each of said plurality of longitudinally extending ribs are located a same hypothetical cylindrical surface) allows for a more straightforward extrusion of the cylinder barrel. Likewise, the design of the piston is also simplified. This also avoids an introduction of an asymmetry in the cylinder barrel and/or the piston which would reduce the degree of the n-fold axial symmetry of the cylinder barrel and/or the piston, where n corresponds to the number of ribs and/or grooves. Likewise, forming the grooves as part of a same hypothetical circular groove reduces design complexity by avoiding having to place different spacers at different heights or compensating such different height by a different length.

An embodiment of the present invention is characterised in that said metal is aluminium or an alloy thereof.

Aluminium has many advantages as a material, as it is robust and light at the same time, can withstand bad weather conditions and requires little maintenance. It is also very suitable for use in an extrusion process.

An embodiment of the present invention is characterised in that the damper shaft is made of a metal, in particular of stainless steel.

A metal damper shaft is preferred to a damper shaft made of a polymeric material. Whilst the required strength in as compact a damper shaft as possible (i.e. a damper shaft with as small a radius as possible) is achievable using both a metal or a polymeric material, the metal option is often cheaper.

An embodiment of the present invention is characterised in that each spacer is made of a polymeric material which is less abrasive towards said metal than said fibre reinforced polymeric material is towards said metal.

This avoids reduces the risk of damaging the cylinder barrel of the dashpot due to a motion of the spacers with respect to the cylinder barrel.

An embodiment of the present invention is characterised in that said plurality of spacers are free of hard fibres which have, in particular, a Mohs hardness higher than 4.0.

Such materials further reduce the risk of damaging the cylinder barrel of the dashpot due to a motion of the spacers with respect to the cylinder barrel.

An embodiment of the present invention is characterised in that each spacer is static with respect to the cylinder barrel.

This removes material restrictions on the spacers since static spacers do not cause wear and tear on the cylinder barrel.

An embodiment of the present invention is characterised in that the dashpot further comprises: a one-way fluid passage allowing fluid flow from the low pressure compartment to the high pressure compartment when said closure member is being opened; and at least one restricted fluid passage connecting the high pressure compartment and the low pressure compartment and determining a closing speed of the closing movement of the closure system.

The use of a one-way fluid passage and at least one restricted fluid passage are common in dashpots to damp the sliding piston motion only in one direction.

An embodiment of the present invention is characterised in that the dashpot further comprises a pressure compensation mechanism for compensating changes of the volume of said hydraulic fluid upon temperature variations thereof. The pressure compensation mechanism may comprise at least one of: an amount of a gas in the hydraulic fluid to compensate said changes of the volume of the hydraulic fluid; and an expansion channel with a plunger that fits into the expansion channel and is slidably received therein, the plunger dividing the expansion channel into a first compartment which is in fluid communication with said closed cylinder cavity and a second compartment that is sealed off from the first compartment by said plunger, the second compartment allowing the plunger to slide within the expansion channel to compensate said changes of the volume of the hydraulic fluid.

Adding gas or providing an expansion channel provides sufficient space to allow the hydraulic fluid to expand without resulting in excessive pressures that could damage the closed cylinder cavity due to large outdoors temperature variations, which could cause leakage of hydraulic fluid through one or more seals used in closing the closed cylinder cavity. As such, the dashpot is more resistant to temperature variations. Moreover, the plunger seals off the first compartment from the second compartment ensuring that the contents of the second compartment, e.g. gas or air, cannot enter in the first compartment. As such, the gas or air in the expansion channel cannot enter the closed cylinder cavity and thus cannot disrupt the normal operations of the dashpot.

An embodiment of the present invention is characterised in that the dashpot comprises a second restricted fluid passage connecting the high pressure compartment and the low pressure compartment and having a narrowest cross-sectional area determined in a hypothetical plane with a normal direction; and a needle valve positioned at least partially inside the second restricted fluid passage and comprising: an elongated body extending between a first end fixed to the cylinder barrel and a second end opposite the first end, wherein a length of the elongated body is temperature dependent; and a tip positioned at the second end of the elongated body near the narrowest cross-sectional area, wherein a projection of the tip onto said hypothetical plane along said normal direction forms a two-dimensional shape which does not fully cover said narrowest cross-sectional area.

The second restricted fluid passage and needle valve form a compensation mechanism configured for compensating temperature-induced viscosity changes in said hydraulic fluid. The compensation mechanism according to this embodiment is based on the known concept of a needle valve disposed in a restricted fluid passage with the difference in thermal expansion between the needle valve (i.e. the elongated body thereof) and the cylinder barrel material (in which the second restricted fluid passage is formed) causing a variation of the clearance between the needle valve tip and the second restricted fluid passage, which variation compensates for temperature-induced viscosity changes of the hydraulic fluid.

The provision of a second restricted fluid passage in addition to a first restricted fluid passage (which determines the closing speed of the dashpot) avoids the problems that arise in the dashpots of WO 2021/170871 A1 and EP 3 907 418 A1 which both rely on a single restricted fluid passage. As such, even should the second restricted fluid passage be closed off due to unforeseen circumstances, fluid flow along the first restricted fluid passage remains possible. The dashpot thus cannot get stuck.

Furthermore as a projection of the tip onto the hypothetical plane in which the narrowest cross-section of the second restricted fluid passage is determined along said normal direction forms a two-dimensional shape which does not fully cover said narrowest cross-sectional area, the tip cannot fully cover the narrowest cross-sectional area irrespective of the temperature. It is therefore impossible for the second restricted fluid passage to become fully closed.

Moreover, the compensation mechanism does not require a multi-material piston as in EP 3 907 417 A1 so that the downsides, e.g. cost and design complexity, associated therewith are avoided.

There is also no need to rely on a clearance between the piston and the cylinder as in the dashpot of EP 3 067 499 A1 to act as a compensation mechanism. This clearance may be subject to large manufacturing tolerances, and thus unreliable over large temperature variations.

An embodiment of the present invention is characterised in that the dashpot further comprises a seal on the piston between the high pressure compartment and the low pressure compartment. This seals avoids any unwanted hydraulic fluid flow along the piston outside of the various restricted fluid passages.

The present invention is also directed to a hydraulically damped actuator for damping a closing movement of a closure system comprising the dashpot described above. The actuator thus achieves the same advantageous effects.

An embodiment of the present invention is characterised in that the actuator further comprises: an energy storing mechanism configured for storing energy when said closure member is being opened and for restoring said energy to effect closure of said closure member, the energy storing mechanism comprising a torsion spring having a first extremity operatively connected to the damper shaft and a second extremity operatively connected to the cylinder barrel.

A torsion spring which functions as an energy storing mechanism is a robust and well known technique to achieve a self-closing closure system.

### Brief description of the drawings

The invention will be further explained by means of the following description and the appended figures.
Figure 1 shows a hydraulically damped actuator with a dashpot according to the present invention mounted on a closure system.
Figure 2 shows a longitudinal cross-section through the dashpot according to the present invention.
Figure 3 shows a transverse cross-section through the dashpot according to the present invention at the location of the spacer.
Figure 4 shows a perspective view of a transverse cross-section through the cylinder barrel used in the dashpot according to the present invention.
Figure 5 shows a perspective view of an annular spacing member used in the dashpot according to the present invention.
Figure 6 shows a longitudinal cross-section through the cylinder barrel and annular spacing member mounted thereon used in the dashpot according to the present invention.

### Description of the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "substantially" includes variations of +/- 10% or less, preferably +/-5% or less, more preferably +/-1% or less, and more preferably +/-0.1% or less, of the specified condition, in as far as the variations are applicable to function in the disclosed invention. It is to be understood that the term "substantially A" is intended to also include "A".

The invention generally relates to a dashpot for damping a closing movement of a closure system having a support and a closure member that are hingedly connected to each other. The dashpot according to the present invention is either part of a hydraulically damped actuator or part of a hinge and may generally be used in any actuator or hinge embodiment disclosed in WO 2018/121890 A1. Details on how to mount the actuator or hinge to the closure system will not be described here and are known to the skilled person.

The dashpot may be used for both orientations of closure systems as the actuator or hinge in which the dashpot is incorporated may be mounted in a differently oriented position depending on the handedness of the closure system. Specifically, for a right-handed closure system, the actuator or hinge is mounted with its longitudinal axis in a first orientation (e.g. upright or upside down), while, for a left-handed closure system, the actuator or hinge is mounted with its longitudinal axis in a second orientation that opposite to the first orientation (e.g. upside down or upright). This enables the energy storing mechanism and the dashpot to operate in the same way for both a right-handed closure system and a left-handed closure system. Naturally, different dashpots may also be provided for differently oriented closure systems. Moreover, mechanical systems are known in the art to allow a single dashpot to be used for differently oriented closure systems, e.g. such as disclosed in WO 2010/054867 A1 or EP 3 162 997 A1**.**

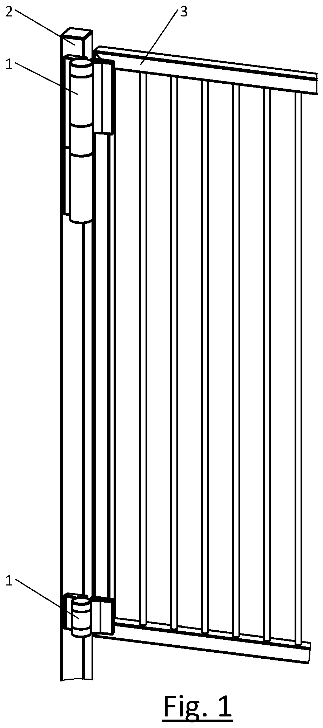

Figure 1 shows an overview of a closure system having first member and a second member that are hingedly attached to one another by means of one or more hinges 1. The first member is typically a fixed support 2, such as a wall or a post, while the second member is typically a moveable closure member 3, such as a gate, a door, or a window. In this illustrated embodiment, the dashpot is incorporated in the top hinge 1. An opening/closing movement of the closure member 3 with respect to the support 2 is transferred, via leaves of the hinge, to the dashpot.

In a typical application, it is desired that the closure member 3 is self-closing. Generally, this may be achieved by providing an actuator that comprises an energy storing mechanism and a dashpot both of which are operatively connected with the members of the closure system. Naturally, the energy storing mechanism and the dashpot may be provided in different physical entities (e.g. a dashpot in a top hinge and the energy storing mechanism in a bottom hinge) that are separately attached to the same closure system. The energy storing mechanism is configured for storing energy when the closure system is being opened and for restoring the energy to effect closure of the closure system. The dashpot is configured for damping a closing movement of the closure system and comprises a piston that is slidable along the longitudinal direction within the actuator between two extreme positions.

In an embodiment, a torsion spring is used as energy storing mechanism. Such a torsion spring is interposed between a static component fixed to the support (e.g. a housing of the actuator) and a rotating component fixed to the closure member (e.g. a mechanical connector connected to a damper shaft). The torsion spring generally has a first extremity that is fixed with respect to the housing of the actuator and a second extremity that is fixed with respect to the damper shaft. An opening motion of the closure system results in the torsion spring being wound up thereby increasing its potential energy. A release of this potential energy, i.e. an unwinding of the torsion spring, urges the closure member 3 to its closed position.

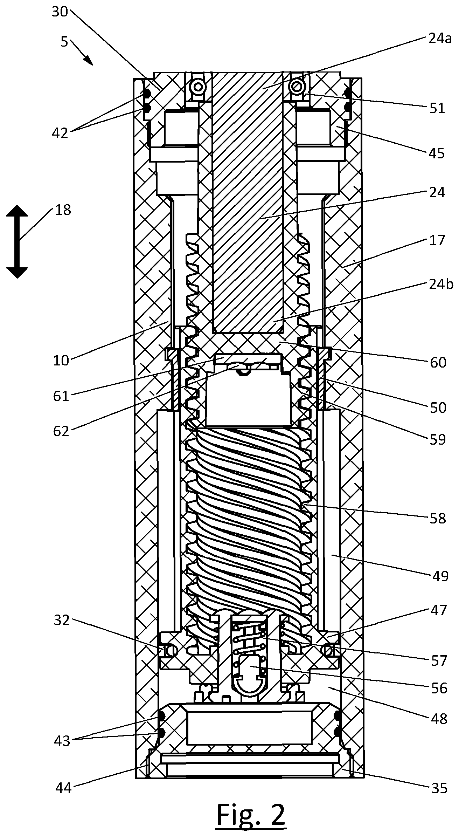

Figure 2 shows a longitudinal cross-section trough a dashpot 5 according to the present invention. The dashpot comprises a cylinder barrel 17 which acts as a housing and which extends in a longitudinal direction 18. A closed cylinder cavity is formed within the cylinder barrel 17 and is filled with hydraulic fluid. According to the present invention, the cylinder barrel 17 is manufactured by extrusion moulding.

In an embodiment, the dashpot 5 uses a hydraulic fluid having a kinematic viscosity which is variable in a first, lower, temperature range and which is stable in a second, upper, temperature range (the second temperature range being nonoverlapping with the first temperature range). The lower temperature range may, for example, be from any one of -40°C or -30°C or -20°C to any one of 0°C or 10°C or 20°C or 30°C and/or the upper temperature range may, for example, be from any one 0°C or 10°C or 20°C or 30°C or 40°C to any one of 40°C or 50°C or 60°C or 70°C or 80°C. Between these temperature ranges there is a critical temperature (range) in which the kinematic viscosity shifts from variable to stable. The critical temperature may generally be comprised between 0°C and 40°C, in particular between 5°C and 35°C and more in particular between 10°C and 30°C and may span a range of several degrees, e.g. 15°C to 25°C. The hydraulic fluid may have a viscosity index of at least 100 determined in accordance with ISO 2909:2002.

The dashpot 5 comprises a shaft 24 that extends along the longitudinal direction 18 of the cylinder barrel 17. The shaft 24 has a first extremity 24a that is operatively connected to closure system (e.g. through a mechanical connector). The shaft 24 has a second extremity 24b on which a piston 47 is mounted. The shaft 24 transfers the opening and closing movement of the closure system to the dashpot and is therefore also referred to as the damper shaft 24. In other words, a rotation (i.e. opening or closing of the closure system) results in a relative rotation of the damper shaft 24 with respect to the cylinder barrel 17. The damper shaft 24 usually rotates together with the closure member 3. In particular, the damper shaft 24 rotates over substantially the same angle with respect to the cylinder barrel 17 as the angle over which the closure member 3 moves with respect to the fixed support 2.

The dashpot 5 further comprises a piston 47 placed in the closed cylinder cavity to divide the closed cylinder cavity into a high pressure compartment 48 and a low pressure compartment 49. The dashpot 5 also comprises a motion converting mechanism to convert the relative rotation between the cylinder barrel 17 and the damper shaft 24 into a sliding motion of the piston 47 between two extreme positions. The first extreme position is shown in figure 2 where the piston 47 is located at one end of the closed cylinder cavity with the high pressure compartment 48 having its minimal volume. The first extreme position corresponds to the actuated state of the dashpot in which the closure system is opened. The second extreme position is not shown and corresponds to a state where the piston 47 is located at the opposing end of the closed cylinder cavity with the low pressure compartment 49 having its maximal volume. The second extreme position corresponds to the rest state of the dashpot 5 in which the closure system is closed.

According to the invention, the piston 47 is made from a fibre reinforced polymeric material. Polymeric materials, in particular thermoplastic materials, are preferred as these enable to cost-efficiently fabricate the piston 47 using injection moulding. A preferred thermoplastic material is polyoxymethylene (POM). The use of fibres improves the overall strength of the piston 47 and its temperature stability. Preferably, glass fibres or carbon fibres are used.

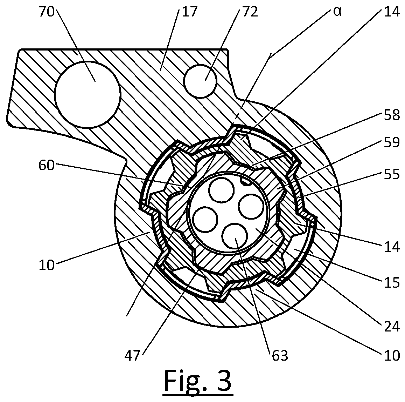

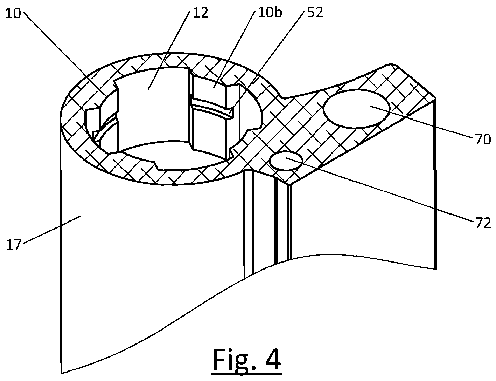

The motion converting mechanism comprises a rotation prevention mechanism for preventing a rotation of the piston 47 with respect to the cylinder barrel 17 which is illustrated in figure 3. To this end, the cylinder barrel 17 is provided with a plurality (four in the illustrated embodiment) of longitudinally extending ribs 10 which are integrally formed with the cylinder barrel 17. Each rib 10 protrudes with respect to an inner surface 12 of the cylinder barrel 17 as best shown in figure 4. The ribs 10 cause that a cross-section through the cylinder barrel 17 in a normal plane (i.e. a horizontal plane) perpendicular to the longitudinal direction has a non-circular inner contour. The piston 47 is provided with corresponding grooves on its outer surface. The grooves cause that a cross-section through the piston 47 in a normal plane (i.e. a horizontal plane) perpendicular to the longitudinal direction has a non-circular inner contour corresponding to the one formed by the cylinder barrel 17. In the illustrated figures, the grooves are not numbered and are delimited by upstanding ribs 14 protruding from the piston 47 radially outwards. Free space 15 is provided between adjacent ribs 14 which delimit another groove so as to save material in manufacturing the piston 47. The cooperating grooves and ribs 10 prevent a rotation of the piston 47 with respect to the cylinder barrel 17. Figure 3 further shows an annular spacing member 50 positioned between the piston 47 and the cylinder barrel 17. The role of this annular spacing member 50 is described below.

As shown in figure 2, the motion converting mechanism further comprises two mutually co-operating screw threads 58, 59. The first screw thread 58 is provided on an inner surface of the piston 47 and the second screw thread 59 is provided on an outer surface of the damper shaft 24. In the illustrated embodiment, the second screw thread 59 is formed by a spindle 60 fixed to the damper shaft 24 to avoid having to provide the screw thread 59 directly in the metal damper shaft 24. Furthermore, this allows to manufacture the spindle 60 from the same material as the piston 47 thus avoiding material incompatibilities (e.g. abrasiveness caused by the use of a glass fibre reinforced piston and a metal shaft). The spindle 60 also provides a convenient way to increase the diameter of the screw thread 59. The spindle 60 is fixed to the second end 24b of the damper shaft 24 by means of a fixation plate 61 and bolts 62 (or other conventional fixation means) that extend through the fixation plate 61 and the spindle 60 into openings 63 (indicated in figure 3) provided in the damper shaft 24. The use of such a spindle 60 and the fixation method is known from EP 3 342 969 A1.

To keep the dashpot 5 as compact as possible, no gearing or reduction is provided between the cylinder barrel 17 and the damper shaft 24. As such, the screw threads 58, 59 have a high helix angle. Preferably, the first screw thread 58 has a helix angle of at least 10°, preferably at least 15° and more preferably at least 20°. Moreover, the screw threads 58, 59 have multiple (five in the illustrated embodiment as shown in figure 3) starts. The screw thread 58, 59 preferably have a lead of at least 30 mm, preferably at least 40 mm and more preferably at least 50 mm.

In the illustrated embodiment, the closed cylinder cavity is closed at the bottom and the top by means of seal caps 30, 35. Specifically, at the top end of the cylinder barrel 17, a top seal cap 30 is disposed around the damper shaft 24. The seal cap 30 is screwed into the cylinder barrel 17 in region 45. A bearing 51, e.g. a roller bearing such as: a ball bearing, a cylindrical roller bearing, a spherical roller bearing, a gear bearing, a tapered rolling bearing or a needle roller bearings, is provided around the damper shaft 24 where the locking element top seal cap 30 is positioned to aid in a smooth relative rotation of the damper shaft 24 with respect to the seal cap 30 that is stationary with respect to the cylinder barrel 17. Sealing rings 42 are provided between the outer wall of the seal cap 30 and the inner wall of the cylinder barrel 17 to prevents leakage of hydraulic fluid. Another sealing ring could be provided between the inner surface of the seal cap 30 and the damper shaft 24. However, as the top end of the cylinder barrel 17 is the low pressure compartment 49, there is already a low risk of leakage. The bottom seal cap 35 is screwed into the cylinder barrel 17 in region 44. Sealing rings 43 are also provided between the bottom seal cap 35 and the cylinder barrel 17 to prevent hydraulic fluid leakage.

The sealing rings 42, 43 may be made from a variety of materials. Polymeric materials, in particular thermoplastic materials such as polyurethane or rubber, are preferred as these enable to cost-efficiently fabricate the sealing rings. Specific examples are EPDM rubber, a thermoplastic elastomer and nitrile rubber.

The dashpot 5 further comprises a one-way fluid passage 57 which allows the hydraulic fluid to flow from the low pressure compartment 49 of the closed cylinder cavity to the high pressure compartment 48 thereof when the closure system is being opened. The opening movement of the closure system is therefore not damped or at least to a smaller extent than the closing movement. This one-way passage 57 may be provided in the piston 47, in particular in a fluid passage through the piston 47. In the illustrated embodiment, the one-way passage 57 comprises a one-way valve 56, e.g. a spring-biased ball valve, to achieve the one-way behaviour.

The piston 47 may further be provided with a further one-way fluid passage with a safety valve (not shown) which enables flow of hydraulic fluid in the opposite direction (i.e. from the high pressure compartment 48 to the low pressure compartment 49) but only in case the pressure in the high pressure compartment 48 of the cylinder cavity would exceed a predetermined threshold value, for example when an external closing force would be exerted onto the closure member 3 which could damage the dashpot 5. The spring provided in such a safety valve thus has a much larger spring constant than the spring provided in the one-way valve as the safety valve should not be opened under normal operating conditions. This further one-way fluid passage may be provided in the piston 47.

To achieve the damping action upon closing of the closure system, at least one restricted fluid passage 72 is provided between the compartments 48, 49 of the closed cylinder cavity. In the illustrated embodiment, the restricted fluid passage 72 is formed in the cylinder barrel 17 as illustrated in figure 3. Advantageously, the dashpot is provided with multiple restricted fluid passages as disclosed in unpublished European patent application 23180661.3. The use of multiple restricted fluid passages allows to control the closing speed of the dashpot, the end stroke of the dashpot, and provides a compensation system to compensate temperature-induced viscosity changes of the hydraulic fluid.

A sealing 32 is provided on the outer surface of the piston 47 in engagement with the inner surface of the cylinder barrel 17. This sealing 32 prevents unwanted hydraulic fluid flow in the area between the piston 47 and the cylinder barrel 17.

The dashpot 5 is mainly used outdoors where large temperature variations are not uncommon. For example, summer temperatures up to 70°C when the dashpot 5 is exposed to sunlight and winter temperatures below -30°C are not uncommon, i.e. temperature variations up to and possibly even exceeding 100°C are possible. Moreover, there are also daily temperature variations between night and day which can easily exceed 30°C when the dashpot 5 is subjected to direct sunshine. These temperature variations cause expansion, and also contraction, of the hydraulic fluid, which could affect the operation of the dashpot. In particular, the expansion due to temperature variations can be up to 1% of the volume of hydraulic fluid for a temperature variation of 10°C, depending on the expansion coefficient of the hydraulic fluid. As such, an expansion of, for example, up to 3 ml for a temperature difference of 50°C is possible.

To counter this expansion, a small amount of gas such as air could be provided in the hydraulic fluid itself. However, it has been found that this gas may interfere with the good working of the dashpot 5, especially when gas bubbles, or an emulsion of the gas in the hydraulic fluid, passes through the restricted fluid passages and provides a smaller damping effect than pure hydraulic fluid. Consequently, the hydraulic fluid is preferably free of gas bubbles. In the dashpot 5 illustrated in the drawings, expansion of the hydraulic fluid is countered by means of an expansion channel 70 provided in the cylinder barrel 17 as shown in figure 3. Further details of the expansion channel are disclosed in WO 2018/121890 A1.

Further details of the annular spacing member 50 which avoids direct contact between the piston 47 and the cylinder barrel 17 are described with respect to figures 3 to 6. In case the annular spacing member 50 is also reducing friction of the sliding piston (with respect to the cylinder barrel metal material), the term annular friction reduction member 50 may be used.

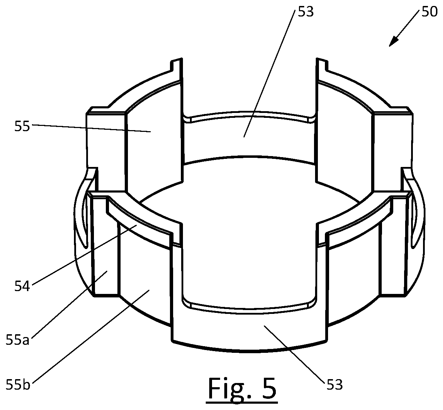

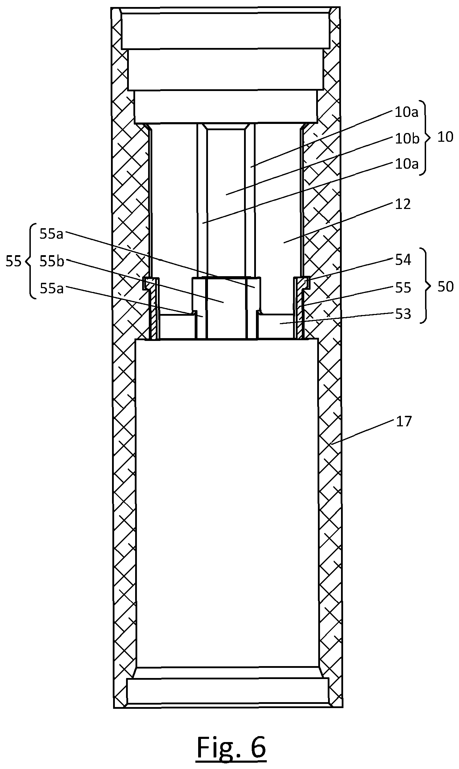

Figure 5 shows the annular spacing member 50 which comprises, for each rib 10 on the cylinder barrel 17, a spacer 55 (or friction reduction element). The individual spacers 55 are connected to adjacent ones by a connection region 53. The connection region 53 may be relatively flexible allowing, for example, to deform the overall annular shape by depressing a spacer 55 inwards. This may allow inserting the annular spacing member 50 inside the cylinder barrel 17. As shown in figures 4 and 6, each rib 10 is provided with a groove 52 on its inner surface 10b. Each spacer 55 is provided with a corresponding ledge 54 which fits in a respective groove 52. This allows mounting the annular spacing member 50 on the cylinder barrel 17 without additional elements. The ledges 54 are located as far away from the connection regions 53 as possible so as to allow tilting the ledges 54 inwards to insert the annular spacing member 50 into the cylinder barrel 17.

Each spacer 55 has a shape corresponding to the ribs 10 on the cylinder barrel 17 so as to fully cover the entire circumference of a rib 10. More specifically, as indicated in figure 8, each rib 10 has an inner surface 10b facing the piston 47 and two lateral abutment faces 10a. As shown in figure 5, each spacer 55 thus also has a cover face 55b and lateral abutment faces 55a. As shown in figure 3, the cover face 55b of a spacer 55 is in direct contact with the inner face 10b of a rib 10 on side of the cover face 55b and with the bottom of a groove in the piston 47 on the other side of the cover face 55b. Likewise, each lateral abutment faces 55a is sandwiched between a lateral abutment face 10a of a rib 10 and a lateral face of a rib 14 delimiting the groove in the piston 47. In this way, the spacers 55 bear little to no forces (besides compression forces) exerted by the piston 47 onto the cylinder barrel 17.

Figure 3 also illustrates that a hypothetical plane α connecting opposing abutment surfaces 10b of the ribs 10 or lateral surfaces of ribs 14 delimiting the grooves in the piston 47 are tangential to the damper shaft 24.

In an embodiment, the annular spacing member 50 is injection moulded (or more generally manufactured) from non-abrasive polymeric material, such as polyamide (PA), polybutylene succinate (PBS), or polybutylene terephthalate (PBT) so as to avoid damage to the cylinder barrel 17. Although, since the annular spacing member 50 is stationary, this is not an essential requirement for the invention to operate.

Although aspects of the present disclosure have been described with respect to specific embodiments, it will be readily appreciated that these aspects may be implemented in other forms within the scope of the invention as defined by the claims.

## Claims

1. A dashpot (5) for damping a closing movement of a closure system having a support (2) and a closure member (3) that are hingedly connected to each other, the dashpot comprising:
- a cylinder barrel (17) extending in a longitudinal direction (18) and having an inner surface (12), the cylinder barrel being extruded or broached from metal;
- a closed cylinder cavity formed within the cylinder barrel and being filled with a volume of hydraulic fluid;
- a piston (47) within said cylinder barrel so as to divide the closed cylinder cavity into a high pressure compartment (48) and a low pressure compartment (49), the piston having an inner surface and an outer surface and being slidable with respect to the cylinder barrel between two extreme positions in said longitudinal direction, the piston being made of a fibre reinforced polymeric material;
- a damper shaft (24) rotatably mounted within the cylinder barrel and having an outer surface; and
- a motion converting mechanism for converting a rotational motion of the damper shaft in a sliding motion of the piston, the motion converting mechanism comprising:
- a rotation prevention mechanism for preventing a rotation of the piston with respect to the cylinder barrel; and
- mating screw threads configured to cooperate with one another so that upon a relative rotation between the cylinder barrel and the damper shaft the piston slides along the damper shaft along said longitudinal direction, the mating screw threads comprising a first screw thread (59) provided on the outer surface of the damper shaft and a second screw thread (58) provided on the inner surface of the piston,
**characterized in that** the rotation prevention mechanism comprises:
- at least one longitudinally extending rib (10) integrally formed with the cylinder barrel on the inner surface thereof and causing that a cross-section through the cylinder barrel in a normal plane perpendicular to the longitudinal direction has a non-circular inner contour;
- at least one longitudinally extending groove integrally formed with the piston on the outer surface thereof and causing that a cross-section through the piston in said normal plane has a non-circular outer contour, wherein each of the at least one longitudinally extending ribs is received in a corresponding one of the at least one longitudinally extending grooves; and
- at least one spacer interposed between the cylinder barrel and the piston so as to avoid direct contact of the piston and the cylinder barrel.

2. The dashpot according to claim 1, **characterized in that** the at least one spacer is made from a material which has a higher abrasion resistance than the metal of cylinder barrel.

3. The dashpot according to claim 1 or 2, **characterised in that** the at least one spacer is made of a metal, such as stainless steel, or a polymeric material, such as polyamide (PA), polybutylene succinate (PBS), polybutylene terephthalate (PBT), or polyoxymethylene (POM).

4. The dashpot according to any one of the preceding claims, **characterised in that** the at least one spacer forms at least one friction reduction element which is preferably made from a material having a lower kinetic coefficient of friction than the metal of the cylinder barrel.

5. The dashpot according to any one of the preceding claims, **characterised in that** the piston comprises glass fibre or carbon fibre reinforced polymeric material, in particular glass fibre or carbon fibre reinforced polyoxymethylene (POM).

6. The dashpot according to any one of the preceding claims, **characterised in that** the at least one longitudinally extending rib comprises a plurality of ribs, the at least one longitudinally extending groove comprises a plurality of grooves, and the at least one spacer comprises a plurality of spacers with each spacer being disposed between a corresponding rib-and-groove pair.

7. The dashpot according to claim 6, **characterised in that** said plurality of spacers are part of an annular member (50) which comprises connection regions (53) which connect adjacent ones of said plurality of spacers, the connection regions preferably being flexible and elastic allowing a displacement of the spacers with respect to connection regions.

8. The dashpot according to claim 6 or 7, **characterised in that** said plurality of longitudinally extending grooves are formed by the provision of longitudinally extending protrusions (14) on the outer surface of the piston with each groove being formed by two protrusions with an additional free space preferably being present in the outer surface of the piston between adjacent longitudinally extending protrusions.

9. The dashpot according to any one of claims 6 to 8, **characterized in that** each spacer has an inner surface and an outer surface, the inner surface contacting a respective groove in the piston and the outer surface contacting a respective rib on the cylinder barrel.

10. The dashpot according to any one of claims 6 to 9, **characterized in that** each of said plurality of longitudinally extending ribs forms two abutment surfaces (10a) and each of said plurality of longitudinally extending grooves forms two abutment surfaces, wherein the abutment surfaces of the ribs and the grooves which face one another are parallel.

11. The dashpot according to any one of the preceding claims, **characterized in that** each of the at least one longitudinally extending ribs has an inner surface (10b) facing the piston with a mounting groove (52) being provided in each inner surface, wherein each of the at least one spacers are provided with a ledge (54) which fits into a corresponding mounting groove to mount a spacer to a corresponding rib.

12. The dashpot according to any one of the preceding claims, **characterized in that:**
- each of the at least one spacers covers at least the entire circumference of a corresponding longitudinally extending rib; and/or
- each of the at least one spacers is generally a non-bearing element.

13. The dashpot according to any one of the preceding claims, **characterised in that** the dashpot further comprises:
- a one-way fluid passage (57) allowing fluid flow from the low pressure compartment to the high pressure compartment when said closure member is being opened; and
- at least one restricted fluid passage (72) connecting the high pressure compartment and the low pressure compartment and determining a closing speed of the closing movement of the closure system.

14. A hydraulically damped actuator for damping a closing movement of a closure system, **characterised in that** the hydraulically damped actuator comprises the dashpot according to any one of the preceding claims.

15. The hydraulically damped actuator according to claim 14, **characterised in that** the hydraulically damped actuator comprises: an energy storing mechanism configured for storing energy when said closure member is being opened and for restoring said energy to effect closure of said closure member, the energy storing mechanism comprising a torsion spring having a first extremity operatively connected to the damper shaft and a second extremity operatively connected to the cylinder barrel.

## Patentansprüche

1. Ein Schließdämpfer (5) zur Dämpfung einer Schließbewegung eines Verschlusssystems mit einer Stütze (2) und einem Schließelement (3), die gelenkig miteinander verbunden sind, wobei der Schließdämpfer Folgendes umfasst:
- einen Zylindermantel (17), der sich in eine Längsrichtung (18) ausdehnt und eine Innenfläche (12) hat, wobei der Zylindermantel aus Metall extrudiert oder angeschnitten ist;
- einen geschlossenen Zylinderhohlraum geformt innerhalb des Zylindermantels und gefüllt mit einer Menge von Hydraulikflüssigkeit;
- einen Kolben (47) innerhalb des erwähnten Zylindermantels, um den geschlossenen Zylinderhohlraum in einen Raum mit hohem Druck (48) und einen Raum mit niedrigem Druck (49) zu teilen, wobei der Kolben eine Innenfläche und eine Außenfläche hat und verschiebbar in Bezug auf den Zylindermantel zwischen zwei Endpositionen in der erwähnten Längsrichtung ist, wobei der Kolben aus einem faserverstärkten Polymermaterial hergestellt ist;
- eine Dämpferwelle (24), die drehbar innerhalb des Zylindermantels montiert ist und eine Außenfläche hat; und
- einen Bewegungsumwandlungsmechanismus zum Umwandeln einer Drehbewegung der Dämpferwelle in eine Gleitbewegung des Kolbens, wobei der Bewegungsumwandlungsmechanismus Folgendes umfasst:
- einen Verdrehsicherungsmechanismus, um eine Drehung des Kolbens in Bezug auf den Zylindermantel zu verhindern; und
- zusammenpassende Schraubgewinde, konfiguriert, um miteinander zusammenzuwirken, sodass sich der Kolben bei einer relativen Drehung zwischen dem Zylindermantel und der Dämpferwelle entlang der Dämpferwelle entlang der erwähnten Längsrichtung verschiebt, wobei die zusammenpassenden Schraubgewinde ein erstes Schraubgewinde (59), bereitgestellt auf der Außenfläche der Dämpferwelle, und ein zweites Schraubgewinde (58), bereitgestellt auf der Innenfläche des Kolbens, umfassen,
**dadurch gekennzeichnet, dass** der Verdrehsicherungsmechanismus Folgendes umfasst:
- mindestens eine sich in Längsrichtung ausdehnende Rippe (10), zur Gänze geformt mit dem Zylindermantel auf dessen Innenfläche und bewirkend, dass ein Querschnitt durch den Zylindermantel in einer Normalebene senkrecht zur Längsrichtung eine nicht kreisförmige innere Kontur hat;
- mindestens eine sich in Längsrichtung ausdehnende Nut, zur Gänze geformt mit dem Kolben auf dessen Außenfläche und bewirkend, dass ein Querschnitt durch den Kolben in der erwähnten Normalebene eine nicht kreisförmige äußere Kontur hat, wobei jede der mindestens einen sich in Längsrichtung ausdehnenden Rippen in einer entsprechenden einen der mindestens einen sich in Längsrichtung ausdehnenden Nuten aufgenommen wird; und
- mindestens einen Abstandhalter zwischen dem Zylindermantel und dem Kolben platziert, um direkten Kontakt des Kolbens und des Zylindermantels zu vermeiden.

2. Der Schließdämpfer nach Anspruch 1, **dadurch gekennzeichnet, dass** der mindestens eine Abstandhalter aus einem Material hergestellt ist, das eine höhere Abriebfestigkeit als das Metall des Zylindermantels hat.

3. Der Schließdämpfer nach Anspruch 1 oder 2, **dadurch gekennzeichnet, dass** der mindestens eine Abstandhalter aus einem Metall, wie rostfreiem Stahl, oder einem Polymermaterial, wie Polyamid (PA), Polybutylensuccinat (PBS), Polybutylenterephthalat (PBT) oder Polyoxymethylen (POM) hergestellt ist.

4. Der Schließdämpfer nach irgendeinem der vorigen Ansprüche, **dadurch gekennzeichnet, dass** der mindestens eine Abstandhalter mindestens ein Reibungssenkungselement bildet, welches bevorzugt aus einem Material hergestellt ist, das einen niedrigeren kinetischen Reibungskoeffizienten als das Metall des Zylindermantels hat.

5. Der Schließdämpfer nach irgendeinem der vorigen Ansprüche, **dadurch gekennzeichnet, dass** der Kolben glasfaser- oder kohlefaserverstärktes Polymermaterial umfasst, insbesondere glasfaser- oder kohlefaserverstärktes Polyoxymethylen (POM).

6. Der Schließdämpfer nach irgendeinem der vorigen Ansprüche, **dadurch gekennzeichnet, dass** die mindestens eine sich in Längsrichtung ausdehnende Rippe eine Vielzahl von Rippen umfasst, die mindestens eine sich in Längsrichtung ausdehnende Nut eine Vielzahl von Nuten umfasst, und der mindestens eine Abstandhalter eine Vielzahl von Abstandhaltern umfasst, wobei jeder Abstandhalter zwischen einem entsprechenden Rippe-und-Nut-Paar angeordnet ist.

7. Der Schließdämpfer nach Anspruch 6, **dadurch gekennzeichnet, dass** die erwähnte Vielzahl von Abstandhaltern Teil eines ringförmigen Bauteils (50) ist, welches Verbindungsregionen (53) umfasst, die angrenzende der erwähnten Vielzahl von Abstandhaltern verbinden, wobei die Verbindungsregionen bevorzugt flexibel und elastisch sind und eine Verdrängung der Abstandhalter in Bezug auf Verbindungsregionen erlauben.

8. Der Schließdämpfer nach Anspruch 6 oder 7, **dadurch gekennzeichnet, dass** die erwähnte Vielzahl von sich in Längsrichtung ausdehnenden Nuten durch die Bereitstellung von sich in Längsrichtung ausdehnenden Überständen (14) auf der Außenfläche des Kolbens gebildet ist, wobei jede Nut durch zwei Überstände mit einem zusätzlichen Freiraum geformt ist, bevorzugt vorhanden in der Außenfläche des Kolbens zwischen angrenzenden sich in Längsrichtung ausdehnenden Überständen.

9. Der Schließdämpfer nach irgendeinem der Ansprüche 6 bis 8, **dadurch gekennzeichnet, dass** jeder Abstandhalter eine Innenfläche und eine Außenfläche hat, wobei die Innenfläche in Kontakt mit einer zugehörigen Nut im Kolben steht und die Außenfläche in Kontakt mit einer zugehörigen Rippe auf dem Zylindermantel steht.

10. Der Schließdämpfer nach irgendeinem der Ansprüche 6 bis 9, **dadurch gekennzeichnet, dass** jede der erwähnten Vielzahl von sich in Längsrichtung ausdehnenden Rippen zwei Anschlagflächen (10a) formt und jede der erwähnten Vielzahl von sich in Längsrichtung ausdehnenden Nuten zwei Anschlagflächen formt, wobei die Anschlagflächen der Rippen und der Nuten, die einander gegenüberliegen, parallel sind.

11. Der Schließdämpfer nach irgendeinem der vorigen Ansprüche, **dadurch gekennzeichnet, dass** jede der mindestens einen sich in Längsrichtung ausdehnenden Rippen eine Innenfläche (10b) gerichtet zum Kolben hat, wobei eine Montagenut (52) in jeder Innenfläche bereitgestellt ist, wobei jeder der mindestens einen Abstandhalter mit einer Leiste (54) versehen ist, die in eine entsprechende Montagenut passt, um einen Abstandhalter an einer entsprechenden Rippe zu montieren.

12. Der Schließdämpfer nach irgendeinem der vorigen Ansprüche, **dadurch gekennzeichnet, dass**:
- jeder der mindestens einen Abstandhalter mindestens den gesamten Umfang einer entsprechenden sich in Längsrichtung ausdehnenden Rippe bedeckt; und/oder
- jeder der mindestens einen Abstandhalter allgemein ein nicht-tragendes Element ist.

13. Der Schließdämpfer nach irgendeinem der vorigen Ansprüche, **dadurch gekennzeichnet, dass** der Schließdämpfer ferner Folgendes umfasst:
- eine Einweg-Fluidpassage (57), welche die Fluidbewegung vom Raum mit niedrigem Druck zum Raum mit hohem Druck erlaubt, wenn das erwähnte Schließelement geöffnet wird; und
- mindestens eine beschränkte Fluidpassage (72), welche den Raum mit hohem Druck und den Raum mit niedrigem Druck verbindet und eine Schließgeschwindigkeit der Schließbewegung des Verschlusssystems bestimmt.

14. Ein hydraulisch gedämpfter Betätiger zum Dämpfen einer Schließbewegung eines Verschlusssystems, **dadurch gekennzeichnet, dass** der hydraulisch gedämpfte Betätiger den Schließdämpfer nach irgendeinem der vorigen Ansprüche umfasst.

15. Der hydraulisch gedämpfte Betätiger nach Anspruch 14, **dadurch gekennzeichnet, dass** der hydraulisch gedämpfte Betätiger Folgendes umfasst: einen Energiespeichermechanismus, konfiguriert, um Energie zu speichern, wenn das erwähnte Schließelement geöffnet wird, und um die erwähnte Energie zurückzuspeisen, um das Schließen des erwähnten Schließelements zu bewirken, wobei der Energiespeichermechanismus eine Drehfeder umfasst, welche einen ersten Endpunkt hat, der operativ mit der Dämpferwelle verbunden ist, und einen zweiten Endpunkt, der operativ mit dem Gehäuse verbunden ist.

## Revendications

1. Amortisseur (5) destiné à amortir un mouvement de fermeture d'un système de fermeture comportant un support (2) et un élément de fermeture (3) reliés l'un à l'autre par une articulation, l'amortisseur comprenant :
- un corps de cylindre (17) s'étendant dans une direction longitudinale (18) et présentant une surface intérieure (12), le corps de cylindre étant extrudé ou broché à partir d'un métal ;
- une cavité cylindrique fermée formée à l'intérieur du corps de cylindre et remplie d'un volume de fluide hydraulique ;
- un piston (47) situé à l'intérieur dudit corps de cylindre de manière à diviser la cavité cylindrique fermée en un compartiment haute pression (48) et un compartiment basse pression (49), le piston présentant une surface intérieure et une surface extérieure et pouvant coulisser par rapport au corps de cylindre entre deux positions extrêmes dans ladite direction longitudinale, le piston étant réalisé en un matériau polymère renforcé de fibres ;
- un arbre d'amortisseur (24) monté de manière rotative à l'intérieur du corps de cylindre et présentant une surface extérieure ; et
- un mécanisme de conversion de mouvement destiné à convertir un mouvement de rotation de l'arbre d'amortisseur en un mouvement de coulissement du piston, le mécanisme de conversion de mouvement comprenant :
∘ un mécanisme anti-rotation destiné à empêcher la rotation du piston par rapport au corps de cylindre ; et
∘ des filetages d'accouplement configurés pour coopérer l'un avec l'autre de telle sorte que, lors d'une rotation relative entre le corps de cylindre et l'arbre d'amortisseur, le piston coulisse le long de l'arbre d'amortisseur dans ladite direction longitudinale, les filetages d'accouplement comprenant un premier filetage (59) prévu sur la surface extérieure de l'arbre d'amortisseur et un second filetage (58) prévu sur la surface intérieure du piston,
**caractérisé en ce que** le mécanisme anti-rotation comprend :
- au moins une nervure (10) s'étendant longitudinalement, formée d'un seul tenant avec le corps de cylindre sur la surface interne de celui-ci et ayant pour effet qu'une section transversale du corps de cylindre dans un plan normal perpendiculaire à la direction longitudinale présente un contour interne non circulaire ;
- au moins une rainure s'étendant longitudinalement, formée d'un seul tenant avec le piston sur la surface extérieure de celui-ci et ayant pour effet qu'une section transversale à travers le piston dans ledit plan normal présente un contour extérieur non circulaire, dans lequel chacune de ladite au moins une nervure s'étendant longitudinalement est logée dans une rainure correspondante de ladite au moins une rainure s'étendant longitudinalement ; et
- au moins une entretoise intercalée entre le corps de cylindre et le piston de manière à éviter tout contact direct entre le piston et le corps de cylindre.

2. Amortisseur selon la revendication 1, **caractérisé en ce que** ladite au moins une entretoise est réalisée dans un matériau présentant une résistance à l'abrasion supérieure à celle du métal du corps de cylindre.

3. Amortisseur selon la revendication 1 ou 2, **caractérisé en ce que** ladite au moins une entretoise est réalisée en un métal, tel que l'acier inoxydable, ou en un matériau polymère, tel que le polyamide (PA), le polybutylène succinate (PBS), le polybutylène téréphtalate (PBT) ou le polyoxyméthylène (POM).

4. Amortisseur selon l'une quelconque des revendications précédentes, **caractérisé en ce que** ladite au moins une entretoise forme au moins un élément de réduction de frottement qui est de préférence constitué d'un matériau présentant un coefficient de frottement cinétique inférieur à celui du métal du corps de cylindre.

5. Amortisseur selon l'une quelconque des revendications précédentes, **caractérisé en ce que** le piston comprend un matériau polymère renforcé de fibres de verre ou de fibre de carbone, en particulier du polyoxyméthylène (POM) renforcé de fibres de verre ou de fibre de carbone.

6. Amortisseur selon l'une quelconque des revendications précédentes, **caractérisé en ce que** ladite au moins une nervure s'étendant longitudinalement comprend une pluralité de nervures, ladite au moins une rainure s'étendant longitudinalement comprend une pluralité de rainures, et ladite au moins une entretoise comprend une pluralité d'entretoises, chaque entretoise étant disposée entre une paire correspondante de nervure et de rainure.

7. Amortisseur selon la revendication 6, **caractérisé en ce que** ladite pluralité d'entretoises fait partie d'un élément annulaire (50) qui comprend des zones de liaison (53) reliant des entretoises adjacentes parmi ladite pluralité d'entretoises, les zones de liaison étant de préférence flexibles et élastiques, permettant un déplacement des entretoises par rapport aux zones de liaison.

8. Amortisseur selon la revendication 6 ou 7, **caractérisé en ce que** ladite pluralité de rainures s'étendant longitudinalement est formée par la présence de saillies s'étendant longitudinalement (14) sur la surface extérieure du piston, chaque rainure étant formée par deux saillies, un espace libre supplémentaire étant de préférence présent dans la surface extérieure du piston entre des saillies adjacentes s'étendant longitudinalement.

9. Amortisseur selon l'une quelconque des revendications 6 à 8, **caractérisé en ce que** chaque entretoise présente une surface intérieure et une surface extérieure, la surface intérieure étant en contact avec une rainure respective du piston et la surface extérieure étant en contact avec une nervure respective du corps de cylindre.

10. Amortisseur selon l'une quelconque des revendications 6 à 9, **caractérisé en ce que** chacune de ladite pluralité de nervures s'étendant longitudinalement forme deux surfaces d'appui (10a) et chacune de ladite pluralité de rainures s'étendant longitudinalement forme deux surfaces d'appui, les surfaces d'appui des nervures et des rainures qui se font face étant parallèles.

11. Amortisseur selon l'une quelconque des revendications précédentes, **caractérisé en ce que** chacune de ladite au moins une nervure s'étendant longitudinalement présente une surface intérieure (10b) tournée vers le piston, une rainure de montage (52) étant prévue dans chaque surface intérieure, dans lequel chacune de ladite au moins une entretoise est pourvue d'un rebord (54) qui s'emboîte dans une rainure de montage correspondante afin de monter une entretoise sur une nervure correspondante.

12. Amortisseur selon l'une quelconque des revendications précédentes, **caractérisé en ce que** :
- chacune de ladite au moins une entretoise recouvre au moins toute la circonférence d'une nervure s'étendant longitudinalement correspondante ; et/ou
- chacune de ladite au moins une entretoise est généralement un élément non porteur.

13. Amortisseur selon l'une quelconque des revendications précédentes, **caractérisé en ce que** l'amortisseur comprend en outre :
- un passage de fluide unidirectionnel (57) permettant l'écoulement de fluide du compartiment basse pression vers le compartiment haute pression lorsque ledit élément de fermeture est en cours d'ouverture ; et
- au moins un passage de fluide à section restreinte (72) reliant le compartiment haute pression et le compartiment basse pression et déterminant une vitesse de fermeture du mouvement de fermeture du système de fermeture.

14. Actionneur à amortissement hydraulique destiné à amortir un mouvement de fermeture d'un système de fermeture, **caractérisé en ce que** l'actionneur à amortissement hydraulique comprend l'amortisseur selon l'une quelconque des revendications précédentes.

15. Actionneur à amortissement hydraulique selon la revendication 14, **caractérisé en ce que** l'actionneur à amortissement hydraulique comprend : un mécanisme de stockage d'énergie configuré pour stocker de l'énergie lorsque ledit élément de fermeture est en cours d'ouverture et pour restituer ladite énergie afin de provoquer la fermeture dudit élément de fermeture, le mécanisme de stockage d'énergie comprenant un ressort de torsion ayant une première extrémité reliée de manière fonctionnelle à l'arbre d'amortisseur et une seconde extrémité reliée de manière fonctionnelle au corps de cylindre.
